# EUROPEAN PATENT APPLICATION

(11) **EP 1 103 731 A1**
(43) Date of publication of application: **30.05.2001**
(21) Application number: 00650199.3
(22) Date of filing: 23.11.2000
(51) Int. Cl.: F16B 5/06, F16B 21/06, E06B 7/14

(54) **A device for fitting to an aperture in a panel**

(30) Priority: 26.11.1999 IE 990991
(71) Applicant: McHugh, John, Athy, County Kildare (IE); Downes, Alan, Bray, County Wicklow (IE); Crean, John, Portlaoise, Co Laois (IE)
(72) Inventor: McHugh, John, Athy, County Kildare (IR); Downes, Alan, Bray, County Wicklow (IR)
(74) Representative: Casey, Lindsay Joseph

(57) **Abstract**

A device for fitting to an aperture 40 in a panel 42 has a body 10 for placing against the surface of the panel over the aperture. Two dependent retaining elements 14, 16 extend down through the aperture and laterally under its edge to bear against the panel. One of the retaining elements 14 is hinged to the body 10 for rotation from an inoperative position to an operative position. A surface 28 on the hinged element engages the edge of the aperture as the body 10 is brought towards the surface of the panel such that the hinged element is automatically rotated from the inoperative to the operative position.

## Description

This invention relates to a device for fitting to a panel having at least one aperture.

According to the present invention there is provided a device for fitting to a panel having at least one aperture, the device comprising a body portion having a base for placing against one surface of the panel adjacent to the aperture and at least two dependent retaining elements for extending downwardly through the aperture and laterally under the edge thereof to bear against the panel, wherein at least one of the retaining elements is hinged to the body portion for rotation from an inoperative position in which the hinged element is retracted inwardly to allow the retaining elements to be inserted into the aperture to an operative position in which the hinged element bears against the panel as aforesaid, the hinged element having means for engaging the said one surface of the panel as the base of the body portion is brought towards the said one surface such that the hinged element is automatically rotated from the inoperative to the operative position, the device further including means for latching the hinged element to the body portion in the operative position of the hinged element.

In an embodiment of the invention the hinged retaining element depends from an enlarged root portion which rotates into a cavity in the body portion as the element is rotated from the inoperative to the operative position, the said engaging means being a surface formed at the junction of the root portion and the hinged element.

In the present specification expressions of orientation such as "top", "bottom", "base", "downwardly", etc., are used for convenience of description and do not limit the orientation of the device in use.

An embodiment of the invention will now be described, by way of example, with reference to the accompanying drawings, in which:
Fig. 1 is a side view of a first embodiment of a device according to the invention;
Fig. 2 is an end view of the first embodiment;
Fig. 3 is a top plan view of the first embodiment;
Fig. 4 is a bottom plan view of the first embodiment;
Fig. 5 is an underneath perspective view of the first embodiment;
Fig. 6 is a perspective view of the top and one aide of the first embodiment;
Figs. 7(a) to 7(c) are successive side views of the first embodiment as it is being fitted to an aperture in a first type of panel;
Figs. 8(a) to 8(c) are successive side views of the first embodiment as it is being fitted to an aperture in a second type of panel;
Fig. 9 is a view similar to Fig. 1 of a second embodiment of a device according to the invention;
Fig. 10 is a view similar to Fig. 2 of the second embodiment;
Fig. 11 is a view similar to Fig. 6 of the second embodiment;
Fig. 12 is a view similar to Fig. 5 of the second embodiment;
Fig. 13 is a perspective view of part of a hollow metal window frame with a drainage hole;
Fig. 14 shows a device according to the first or second embodiment fitted to the drainage hole of Fig. 13;
Fig. 15 shows a device according to the first or second embodiment provided with a hook;
Fig. 16 shows a device according to the first or second embodiment provided with a screw-threaded bore;
Fig. 17 shows various uses for devices according to the invention.

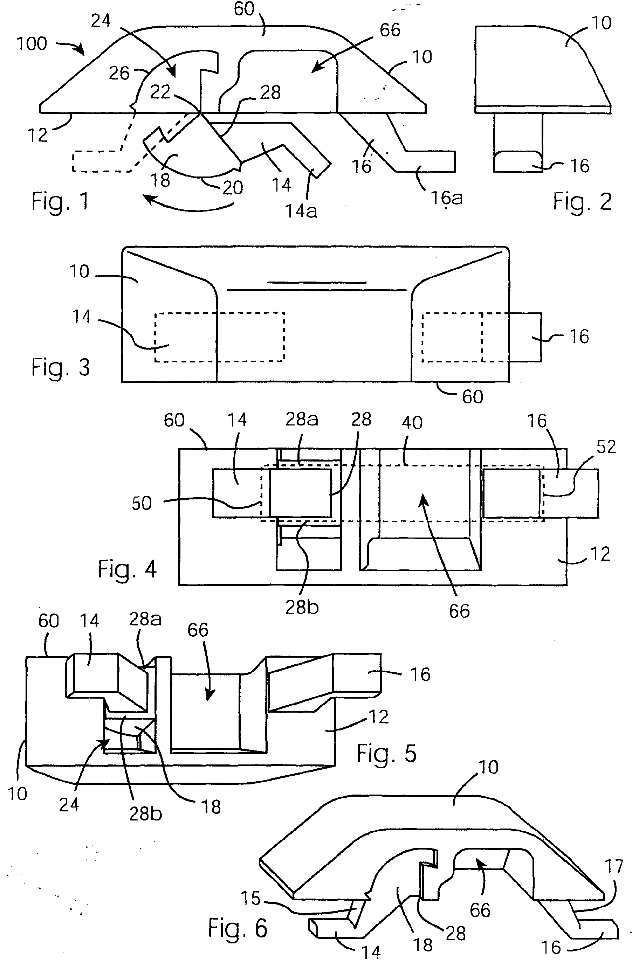

Referring first to Figs. 1 to 6, the device 100 is a one-piece plastics moulding and includes an elongate body portion 10 having a flat base 12 and two dependent retaining elements 14, 16 each adjacent a respective opposite end of the body portion. The element 16 is fixed relative to the body portion and extends downwardly and laterally outwardly therefrom.

The element 14 depends from an enlarged root portion 18 having a part-cylindrical outer surface 20. The root portion 18 is integrally joined to the base 12 of the body portion 10 by a narrow flexible web 22 of the plastics material which acts as a hinge so that the element 14 is rotatable from an inoperative position (shown in solid lines in Fig. 1) where the element 14 is retracted inwardly towards the centre of the body portion, to an operative position (shown in dashed lines in Figs. 1 and 3 and in solid lines in Figs. 4 to 6) where the element 14, like the element 16, extends downwardly and laterally outwardly from the body portion 10.

During rotation of the element 14 from the inoperative to the operative position the root portion 18 rotates into a cavity 24 in the body portion, the cavity 24 having a part-cylindrical inner surface 26 along which the outer surface 20 of the root portion slides. At its junction with the element 14 the root portion has a surface 28 having portions 28a, 28b extending laterally on each side of the element 14. When the element 14 is in its operative position the surface 28 is flush with the base 12 of the body portion 10. The element 14 has a downwardly and outwardly inclined outer surface 15; the element 16 has a downwardly and outwardly inclined outer surface 17. Further, the elements 14, 16 have respective feet 14a, 16a which extend, when the element 14 is in its operative position, mutually away from one another and at least whose upper surfaces, i.e. those surfaces closest to the body 10, are substantially parallel to the base 12 of the body 10.

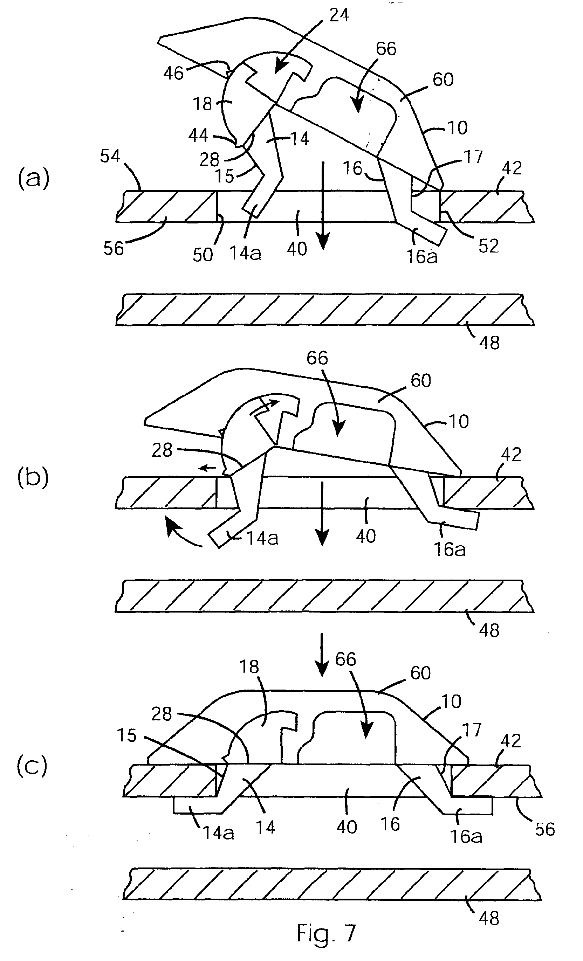

Figs. 7(a) to 7(c) illustrate how the device is fitted to an aperture 40 in a first thickness of panel 42 (the aperture 40 is also shown in plan view in dashed lines in Fig. 4). The aperture 40 has opposite end walls 50, 52. The panel 42 has an upper surface 54 and a lower surface 56. As seen in Fig. 4, the aperture 40 is a slot having a width just greater than the width of the elements 14 and 16, to allow them to pass through, but not as wide as the surface 28.

First, Fig. 7(a), the hinged element 14 is rotated to its inoperative retracted position and, holding the body portion 10, the fixed element 16 is manually manoeuvred around and under one end of the slot 40, i.e. the right hand end in the view shown. Now the left hand end of the body portion 10 is pushed down and at some point, Fig. 7(b), the lateral portions 28a, 28b of the surface 28 will engage the upper surface 54 of the panel 42 on the opposite edges of the slot 40 since, as stated, the width of the surface 28 is greater than the width of the slot 40. Now, further pushing the body portion 10 towards the panel 42 will rotate the element 14 towards its operative position until finally, Fig. 7(c), the surface 28 is flush with the base 12 of the body portion 10, the base 12 is flush with the upper surface 54 of the panel 42, and the element 14 is in its operative position.

In this, the final operative position of the device 100, the elements 14, 16 extend downwardly through the slot 40 and mutually away from one another laterally under the edge of the slot 40 at opposite ends thereof. The depth of the retaining elements 14, 16 is so chosen in relation to the thickness of the panel 42 that in the final operative position of the device 100 the upper surfaces of the feet 14a, 16a of the elements 14, 16 come to bear against the lower surface 56 of the panel 42, so holding the device firmly in place on the panel. In order to latch the device in its operative position, a projection 44 on the root portion 18 snap-engages a corresponding recess 46 in the cavity surface 26 just as the element 14 reaches its operative position.

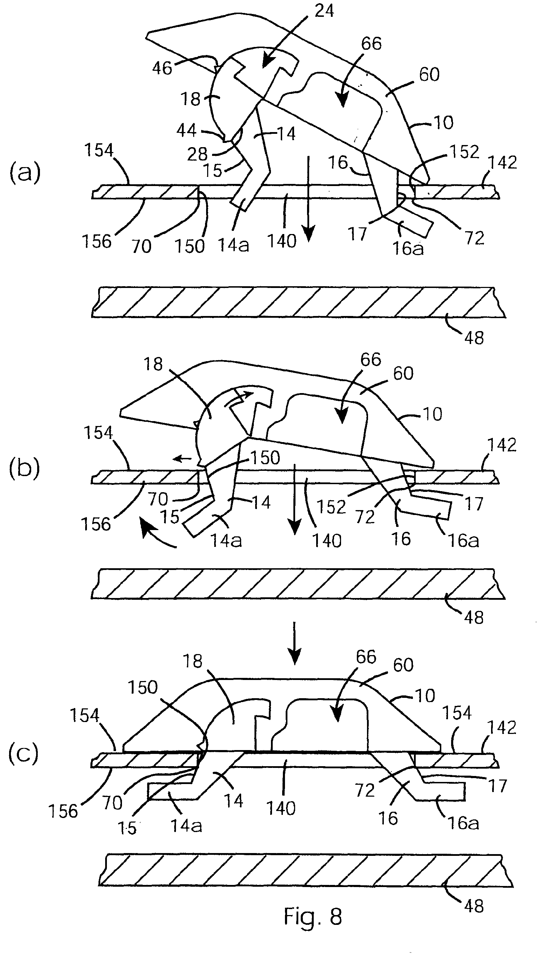

Figs. 8(a) to 8(c), which correspond to those of Figs. 7(a) to 7(c), illustrate how the device 100 is fitted to an aperture 140 in a second panel 142 having a thickness less than the first panel 42. The aperture 140 has opposite end walls 150, 152. The panel 142 has an upper surface 154 and a lower surface 156. The end wall 150 and the lower surface 156 define an arris 70; the end wall 152 and the lower surface 156 define an arris 72. As before, the aperture 140 is a slot having a width just greater than the width of the elements 14 and 16, to allow them to pass through, but not as wide as the surface 28.

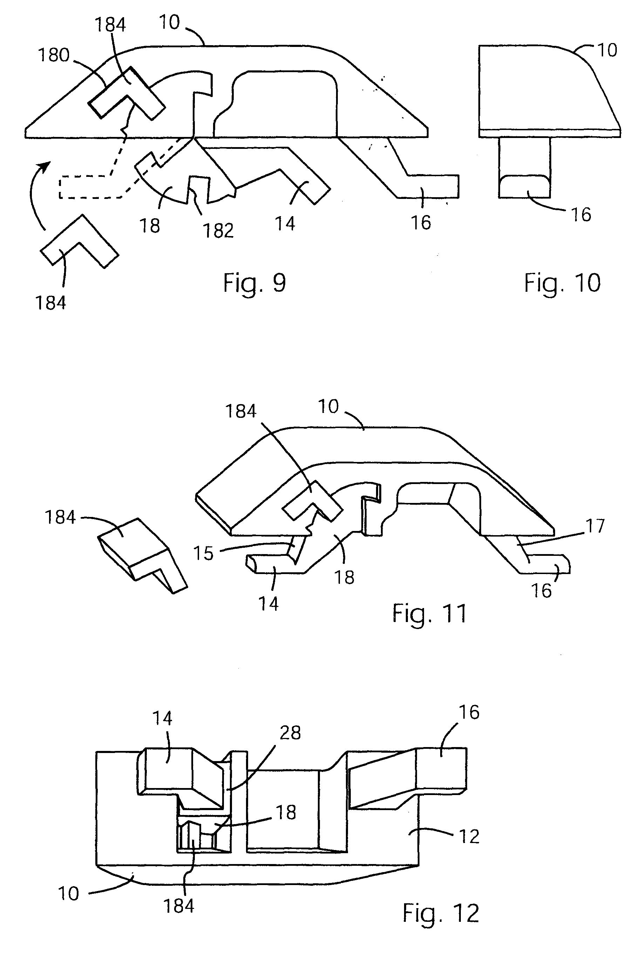

Generally, the manner of fitting the device 100 to the panel 142 is the same as previously described for the panel 42, except that since the thickness of the panel 142 is less than that of the panel 42 the feet 14a, 14b cannot come to bear on the lower surface 56 of the panel 142 in the final operative position of the device 100 because the distance between the upper surfaces of the feet 14a, 16a and the base 12 of the body 10 is greater than the thickness of the panel 142. Consequently, in this case the length of the aperture 140, i.e. the distance between its end walls 150 and 152, is made less than the corresponding length of the aperture 40 so that, in the final operative position of the device 100, Fig. 8(c), the inclined outer surface 15 of the element 14 bears against the arris 70 and the inclined outer surface 17 of the element 16 bears against the arris 72. Clearly, in order to allow secure fitting of the device 100 to the panel 142 in such a case, the less the thickness of the panel 142 the less the length of the aperture 140. It will be understood that, where the device is always to be fitted in the manner shown in Fig. 8, the feet 14a, 14c may be omitted. In a second embodiment of the device, Figs. 9 to 12, respective recesses 180, 182 in the body portion 10 and root portion 18 become aligned to form an L-shaped slot when the element 14 is in its operative position. Then, the device may be locked by inserting an L-shaped locking member 184 into the aligned recesses, this being possible because the cavity 24 is open at one side 60 of the body portion 10.

Thus it will be seen that, due to the automatic rotation of the element 14 to its operative position, the described device is capable of being securely fitted to the slot 40 in the panel 42 even where a second panel 48 is close to the first panel 40 and prevents access to the rear of the first panel.

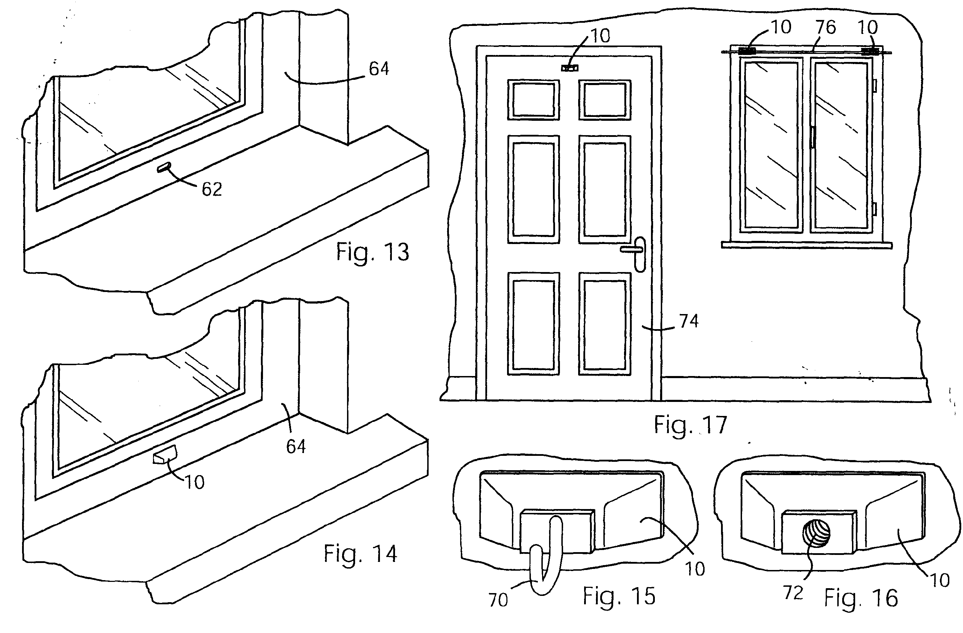

A typical application for the device is to cover a drainage slot 62, Fig. 13, in a hollow metal window frame 64. In this case, to continue to allow drainage through the slot 62 the body portion 10 has a cavity 66 (Figs. 1 to 12) which is open both at the base 12 and the side 60 of the body portion 10, the device being fitted to the window frame with the side 60 facing down.

In other applications it is possible to fit a hook 70 to the body portion 10, Fig. 15, or to provide the body portion 10 with a threaded bore 72, Fig. 16, to receive some other fitting. Such devices could be used, for example, to fit a hook to a hollow metal door 74, Fig. 17, or to fit a curtain rail 76.

Although the device has been described for use with a single aperture or slot 40, it is evident that the device could be fitted to a panel having two apertures, the element 16 being inserted in one of the apertures and the element 14 in the other. Further, it is not necessary that the aperture 40 be a slot, provided that the aperture is so shaped as to present, in the vicinity of the element 14, an edge or edges capable of catching the surface 28 (or any equivalent surface) and thereby rotating the element 14 to its operative position. It is also envisaged that the device could have two or more hinged elements 14, again provided that the aperture was suitably shaped to catch the surface 28 and rotate the element 14 to its operative position. The device may also have more than one fixed element 16, or all the retaining elements of the device may be hinged elements 14. For example, it is clear that the device described herein would work effectively if the element 16 were a hinged element constructed similarly to the element 14.

The invention is not limited to the embodiments described herein which may be modified or varied without departing from the scope of the invention.

## Claims

1. A device for fitting to a panel having at least one aperture, the device comprising a body portion having a base for placing against one surface of the panel adjacent to the aperture and at least two dependent retaining elements for extending downwardly through the aperture and laterally under the edge thereof to bear against the panel, wherein at least one of the retaining elements is hinged to the body portion for rotation from an inoperative position in which the hinged element is retracted inwardly to allow the retaining elements to be inserted into the aperture to an operative position in which the hinged element bears against the panel as aforesaid, the hinged element having means for engaging the said one surface of the panel as the base of the body portion is brought towards the said one surface such that the hinged element is automatically rotated from the inoperative to the operative position, the device further including means for latching the hinged element to the body portion in the operative position of the hinged element.

2. A device as claimed in claim 1, wherein the outer surface of each retaining element is downwardly and outwardly inclined from the base when the hinged retaining element is in its operative position.

3. A device as claimed in claim 1 or 2, wherein each retaining element has an out-turned lower end whose upper surface is substantially parallel to the base when the hinged retaining element is in its operative position.

4. A device as claimed in claim 1, 2 or 3, wherein the hinged retaining element depends from an enlarged root portion which rotates into a cavity in the body portion as the element is rotated from the inoperative to the operative position, the said engaging means being a surface formed at the junction of the root portion and the hinged element.

5. A device as claimed in claim 4, wherein the latching means comprises a projection on one of the root portion and body portion which engages a corresponding recess in the other of the root portion and body portion.

6. A device as claimed in claim 4 or 5, the device further including means for locking the root portion to the body portion in the operative position of the hinged element.

7. A device as claimed in claim 6, wherein the locking means comprises respective recesses in the root portion and body portion which are aligned when the hinged element is in the operative position, and a locking member insertable into the aligned recesses.

8. A device as claimed in any preceding claim, wherein the device includes at least one fixed retaining element and at least one hinged retaining element.

9. A device as claimed in any preceding claim, wherein the device is made as a one-piece plastics mounding, the hinged retaining element being attached to the body portion by a narrow flexible neck acting as a hinge.

10. A device as claimed in any preceding claim, wherein the body portion has a cavity open both at the base and at least one side of the body portion to allow drainage of fluid emerging from the aperture(s) in the panel.

11. A device as claimed in any preceding claim, wherein the body portion is elongate and has a respective retaining element adjacent each opposite end thereof, the retaining elements extending mutually away from each other in their operative positions.
